# EUROPEAN PATENT APPLICATION

(11) **EP 4 462 757 A2**
(43) Date of publication of application: **13.11.2024**
(21) Application number: 24203335.5
(22) Date of filing: 07.08.2020
(51) Int. Cl.: H04L 67/60

(54) **COMMUNICATION METHOD AND COMMUNICATION DEVICE**

(62) Divisional of application: 20947962.5
(71) Applicant: GUANGDONG OPPO MOBILE TELECOMMUNICATIONS CORP., LTD., Dongguan, Guangdong 523860 (CN)
(72) Inventor: FU, Zhe, Dongguan, Guangdong 523860 (CN)
(74) Representative: Penza, Giancarlo

(57) **Abstract**

The embodiments of the present application provide a communication method and a communication device. Said method comprises: determining that a first resource overlaps with a second resource, the first resource being used for carrying an uplink scheduling request, and the second resource being used for carrying uplink data; and in cases where a first condition is satisfied, sending the uplink scheduling request, wherein the first condition comprises the priority of the uplink scheduling request being different from the priority of a first uplink grant, and the first uplink grant being used for transmitting the uplink data, or the first condition comprises the priority of the first resource being different from the priority of the second resource, and the second resource corresponding to the first uplink grant. The present application can reduce the deterioration of communication quality due to resource conflicts and improve the reliability of communication.

## Description

### TECHNICAL FIELD

Embodiments of the present disclosure relate to a communication technology, and in particular, to a communication method and a communication device.

### BACKGROUND

With the popularization of application scenarios of mobile communication systems, the requirements on communication delay and reliability are higher and higher. For example, in Industrial Internet of Things (IIoT), mobile communication systems need to support the services such as industrial automation, transmission automation, and smart power. Since the requirements corresponding to different types of services are different, it is inevitable that a plurality of instructions transmitted to a terminal device by a network side in sequence will conflict, or a plurality of resources used by a terminal device and granted by a network side will conflict, which will lead to resource waste or communication interruption because the terminal device cannot determine which instruction to follow, thereby affecting the communication quality. How to avoid the deterioration of communication quality due to the instruction conflict has become a problem to be solved by those skilled in the art.

### SUMMARY

The embodiments of the present disclosure provide a communication method and a communication device, which can reduce the deterioration of communication quality due to resource conflicts and improve the reliability of communication.

The embodiments of the present disclosure provide a communication method and a communication device, which can reduce the deterioration of communication quality due to resource conflicts and improve the reliability of communication.

In a first aspect, an embodiment of the present disclosure may provide a communication method, applied to a terminal device or a Media Access Control (MAC) entity of the terminal device. The method may include the following operations.

It is determined that a first resource overlaps with a second resource. The first resource is used for carrying an uplink Scheduling Request (SR). The second resource is used for carrying uplink data.

In a case where a first condition is satisfied, the uplink SR is transmitted.

The first condition includes a priority of the uplink SR being different from a priority of a first uplink grant and the first uplink grant being used for transmitting the uplink data; or the first condition includes a priority of the first resource being different from a priority of the second resource and the second resource corresponding to the first uplink grant.

In a second aspect, an embodiment of the present disclosure may provide a communication method, applied to a terminal device or a MAC entity of the terminal device. The method may include the following operations.

It is determined that a third condition is satisfied and a first resource does not overlap with a second resource. The first resource is used for carrying uplink data, and the second resource is used for carrying an uplink SR. The third condition includes a priority of a first uplink grant being different from a priority of the uplink SR, the first uplink grant being used for transmitting the uplink data.

The uplink data is transmitted.

In a third aspect, an embodiment of the present disclosure may provide a communication method, applied to a terminal device or a MAC entity of the terminal device. The method may include the following operations.

A first terminal device receives first information from a network device. The first information is used for indicating a first time-frequency resource position, and the first time-frequency resource position is a preempted time-frequency resource position.

In a case where a first resource overlaps with the time-frequency resource position, the first terminal device determines that the first resource is preempted, and the first resource is a resource carrying uplink data.

In a fourth aspect, an embodiment of the present disclosure may provide a communication method, applied to a terminal device or a MAC entity of the terminal device. The method may include the following operations.

It is determined that a first resource overlaps with a second resource. The first resource is a Dynamic Grant (DG) resource, and the second resource is a Configured Grant (CG) resource.

In a case where a first condition or a second condition is satisfied, the DG resource is transmitted, or the DG resource is identified as a prioritized resource. The first condition or the second condition at least includes determining that the DG resource is transmittable according to at least one of the priority of the DG resource or the priority of the CG resource.

In a fifth aspect, an embodiment of the present disclosure may provide a communication method, applied to a terminal device or a MAC entity of the terminal device. The method may include the following operations.

In a case where more than two Radio Link Control (RLC) entities or more than two Logical channels (LCH) transmit duplicated data, or in a case where the duplicated data is transmitted in a Carrier Aggregation (CA) transmission mode in combination with a Dual Connectivity (DC) transmission mode, it is determined to use or not use an LCH mapping restriction on the LCHs or the RLC entities. The LCH mapping restriction is used for restricting a carrier used when the LCHs transmit data.

In a sixth aspect, an embodiment of the present disclosure may provide a communication device. The communication device is configured in a terminal device or is a terminal device. The device may include a processing unit and a transceiving unit.

The processing unit is configured to determine that a first resource overlaps with a second resource. The first resource is used for carrying an uplink SR, and the second resource is used for carrying uplink data.

The transceiving unit is configured to transmit the uplink SR in a case where a first condition is satisfied.

The first condition includes a priority of the uplink SR being different from a priority of a first uplink grant and the first uplink grant being used for transmitting the uplink data; or the first condition includes a priority of the first resource being different from a priority of the second resource and the second resource corresponding to the first uplink grant.

In a seventh aspect, an embodiment of the present disclosure may provide a communication device. The communication device is configured in a terminal device or is a terminal device. The device may include a processing unit and a transceiving unit.

The processing unit is configured to determine that a third condition is satisfied and a first resource does not overlap with a second resource. The first resource is used for carrying uplink data, and the second resource is used for carrying an uplink SR. The third condition includes a priority of a first uplink grant being different from a priority of the uplink SR, the first uplink grant being used for transmitting the uplink data.

The transceiving unit is configured to transmit the uplink data.

In an eighth aspect, an embodiment of the present disclosure may provide a communication device. The communication device is configured in a terminal device or is a terminal device. The device may include a transceiving unit and a processing unit.

The transceiving unit is configured to receive first information from a network device. The first information is used for indicating that a first resource is discarded, or indicating that the first resource is preempted, or indicating that the first resource cannot be used for transmitting uplink data.

The processing unit is configured to: identify a second resource as a de-prioritized resource in a case where the first resource overlaps with the second resource and the first condition is satisfied, the second resource being a resource for carrying uplink data; or determine that a priority of the second resource is lower than a priority of the first resource. The first condition includes the first terminal device being configured with uplink cancellation configuration information.

In a ninth aspect, an embodiment of the present disclosure may provide a communication device. The communication device is configured in a terminal device or is a terminal device. The communication device may include a processing unit and a transceiving unit.

The processing unit is configured to determine that a first resource overlaps with a second resource. The first resource is a DG resource, and the second resource is a CG resource.

The transceiving unit is configured to: transmit the DG resource or identify the DG resource as a prioritized resource in a case where a first condition or a second condition is satisfied. The first condition or the second condition at least includes determining that the DG resource is transmittable according to at least one of the priority of the DG resource or the priority of the CG resource.

In a tenth aspect, an embodiment of the present disclosure may provide a communication device. The communication device is configured in a terminal device or is a terminal device. The device may include a detection unit and a determination unit.

The detection unit is configured to detect that more than two RLC entities or more than two LCHs transmit duplicated data, or configured to detect that the duplicated data is transmitted in a CA transmission mode in combination with a DC transmission mode.

The determination unit is configured to determine to use or not use an LCH mapping restriction on the LCHs or the RLC entities. The LCH mapping restriction is used for restricting a carrier used when the LCHs transmit data.

In an eleventh aspect, an embodiment of the present disclosure may further provide a terminal device.

The terminal device includes a processor, a memory, and an interface that communicates with a network device.

The memory stores computer execution instructions.

The processor executes the computer execution instructions stored in the memory, so that the processor performs a power density adjustment method provided by any items in the first aspect.

In a twelfth aspect, an embodiment of the present disclosure provides a computer-readable storage medium. The computer-readable storage medium stores computer execution instructions. When being executed by a processor, the computer execution instruction is used for implementing the communication method described in any one of the first to fifth aspects.

According to a thirteenth aspect, an embodiment of the present disclosure provides a program. When being executed by a processor, the program is configured to perform the communication method described in any one of the first to fifth aspects.

Optionally, the abovementioned processor may be a chip.

According to a fourteenth aspect, an embodiment of the present disclosure provides a computer program product, including program instructions. The program instructions are configured to implement the communication method described in any one of the first to fifth aspects.

According to a fifteenth aspect, an embodiment of the present disclosure provides a chip, including a processing module and a communication interface. The processing module can perform the communication method described in any one of the first to fifth aspects.

Further, the chip further includes a memory module (for example, a memory). The memory module is configured to store instructions. The processing module is configured to execute the instructions stored in the memory module, so that the processing module performs the power density adjustment method described in any one of the first to fifth aspects.

### BRIEF DESCRIPTION OF THE DRAWINGS

FIG. 1 illustrates a schematic diagram of a wireless communication system 100 applicable to an embodiment of the present disclosure.
FIG. 2 illustrates a schematic flowchart of a communication method provided by the present disclosure.
FIG. 3 illustrates another schematic flowchart of the communication method provided by the present disclosure.
FIG. 4 illustrates another schematic flowchart of the communication method provided by the present disclosure.
FIG. 5 illustrates another schematic flowchart of the communication method provided by the present disclosure.
FIG. 6 illustrates a schematic block diagram of an example of a communication device of the present disclosure.
FIG. 7 illustrates a schematic structural diagram of an example of a terminal device of the present disclosure.
FIG. 8 illustrates of a schematic structural diagram of an example of a network device of the present disclosure.

### DETAILED DESCRIPTION

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are part rather than all of the embodiments of the present disclosure. All other embodiments obtained by those of ordinary skill in the art based on the embodiments of the present disclosure without creative efforts shall fall within the scope of protection of the present disclosure.

The terms "first", "second", and the like in this specification, claims, and the abovementioned accompanying drawings in the embodiments of the present disclosure are used to distinguish similar objects instead of describing a specific order or sequence. It is to be understood that data used in such a way may be exchanged under appropriate conditions, such that the embodiments of the present disclosure described here can be implemented in a sequence other than sequences graphically illustrated or described here. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

The technical solutions of the embodiments of the present disclosure may be applied to various communication systems, for example: a Global System for Mobile communication (GSM) system, a Code Division Multiple Access (CDMA) system, a Wideband Code Division Multiple Access (WCDMA) system, a General Packet Radio Service (GPRS), a Long Term Evolution (LTE) system, a Frequency Division Duplex (FDD) system, a Time Division Duplex (TDD) system, a Universal Mobile Telecommunication System (UMTS), a Worldwide Interoperability for Microwave Access (WiMAX) communication system, a 5th Generation (5G) communication system, a New Radio (NR) access technology, a Vehicle-to-X (V2X) system, the Internet of Vehicles, a Machine Type Communication (MTC) system, and the Internet of Things (IoT). The V2X may include Vehicle to Network (V2N), Vehicle-to-Vehicle (V2V), Vehicle to Infrastructure (V2I), and Vehicle to Pedestrian (V2P).

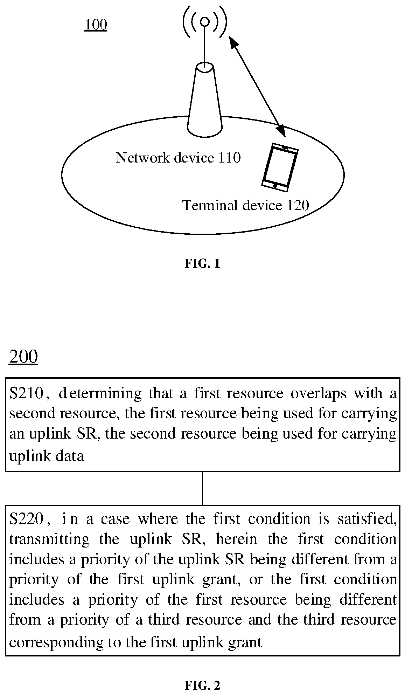

FIG. 1 illustrates a schematic diagram of a wireless communication system 100 applicable to an embodiment of the present disclosure.

As illustrated in FIG. 1, the wireless communication system 100 may include at least one network device, for example, the network device 110 as illustrated in FIG. 1. The wireless communication system 100 may further include at least one terminal device, for example, the terminal device 120 as illustrated in FIG. 1. The network device 110 may indicate a resource for transmitting an SR and a granted uplink resource to the terminal device 120. The terminal device 120 and the network device 110 may determine the information transmitted on an uplink resource according to the transmitting provided by the present disclosure, which is not limited thereto in the present disclosure.

The terminal device in the embodiments of the present disclosure may also be referred to as a User Equipment (UE), an access terminal, a user unit, a user station, a mobile station, a mobile radio station, a remote station, a remote terminal, a mobile device, a user terminal, a terminal, a wireless communication device, a user agent, or a user device. The terminal device in the embodiments of the present disclosure may be a mobile phone, a tablet computer (pad), a computer having wireless sending and receiving functions, a Virtual Reality (VR) terminal device, an Augmented Reality (AR) terminal device, a wireless terminal in industrial control, a wireless terminal in self driving, a wireless terminal in remote medical, a wireless terminal in a smart grid, a wireless terminal in transportation safety, a wireless terminal in a smart city, a wireless terminal in smart home, a cell phone, a cordless telephone, a Session Initiation Protocol (SIP) phone, a Wireless Local Loop (WLL) station, a Personal Digital Assistant (PDA), a hand-held device with a wireless communication function, a computing device, or other processing devices, on-board devices, or wearable devices connected to a wireless modem, a terminal device in a 5G network, a terminal device in a Public Land Mobile Network (PLMN) to be evolved in the future, and the like.

The wearable device, also referred to as a wearable intelligent device, is a generic term of wearable devices obtained by performing intelligent designing and development on daily wearing products, such as glasses, gloves, watches, clothes, and shoes. The wearable device is a portable device that is directly put on a human body or is integrated with clothes or ornaments of a user. The wearable device is not merely a hardware device, but further implements a powerful function through software support, data exchange, and cloud-based interaction. Generalized wearable intelligent devices include, for example, intelligent watches or intelligent glasses with complete functions and large sizes and capable of realizing all or part of functions independent of intelligent phones, and for example, various types of sign monitoring intelligent bands and intelligent jewelries of which each is dedicated to application functions of a certain type and required to be matched with other devices such as intelligent phones for use.

In addition, the terminal device may also be a terminal device in an Internet of things (IoT) system. The IoT is an important part of the development of information technology in the future. Its main technical feature is to connect things with a network through a communication technology, so as to realize the intelligent network of human-computer interconnection and thing-thing interconnection.

It is to be noted that no limits are made to specific forms of the terminal device in the present disclosure.

The network device in the embodiments of the present disclosure may be a device with a wireless transceiving function. The device includes, but is not limited to: an Evolved Node B (eNB), a Radio Network Controller (RNC), a Node B (NB), a Base Station Controller (BSC), a Base Transceiver Station (BTS), a Base Transceiver Station (BTS), a home base station (for example, home evolved nodeB, or home node B, HNB), a Baseband Unit (BBU), an Access Point (AP), a wireless relay node, a wireless return node, a Transmission Point (TP), or a Transmission and Reception Point (TRP) in a Wireless Fidelity (WIFI) system, or a gNB or TRP or TP in a 5G (such as NR) system, or one or a group of antenna plane (including a plurality of antenna planes) in a base station of the 5G system, or a network node forming the gNB or the TRP or TP, such as a BBU, or a Distributed Unit (DU).

In some deployments, the gNB may include a Centralized Unit (CU) and a DU. The gNB may also include an Active Antenna Unit (AAU). The CU realizes part functions of the gNB, and the DU realizes part functions of the gNB. For example, the CU is responsible for processing non-real-time protocols and services, and realizes the functions of Radio Resource Control (RRC) and Packet Data Convergence Protocol (PDCP) layers. The DU is responsible for processing PHY layer protocols and real-time services, and realizes the functions of a Radio Link Control (RLC) layer, a Media Access Control (MAC) layer, and a Physical (PHY) layer. The AAU realizes part PHY layer processing functions, and related functions of RF processing, and active antennae. Since the information of the RRC layer will eventually become the information of the PHY layer or is transformed from the information of the PHY layer, under this architecture, high-level signaling, such as RRC layer signaling, may also be considered to be transmitted by the DU, or transmitted by the DU+AAU. It is to be understood that the network device may be a device including one or more of a CU node, a DU node, and an AAU node. In addition, the CU may be divided into a network device in a Radio Access Network (RAN), or the CU may also be divided into a network device in a Core Network (CN). No limits are made thereto in the present disclosure.

The network device provides service for a cell, and the terminal device communicates with the cell through a transmission resource (for example, a frequency-domain resource or a spectrum resource) allocated by the network device. The cell may belong to a macro base station (such as a macro eNB or macro gNB), may also belong to a base station corresponding to a small cell. Here, the small cell may include: a metro cell, a micro cell, a pico cell, a femto cell, and the like. These small cells have the characteristics of small coverage and low transmitting power, and are suitable for providing high-rate data transmission services.

The terms "first", "second", and the like in this specification, claims, and the abovementioned accompanying drawings in the embodiments of the present disclosure are used to distinguish similar objects instead of describing a specific order or sequence. It will be appreciated that data used in such a way may be exchanged under appropriate conditions, such that the embodiments of the present disclosure described here can be implemented in a sequence other than sequences graphically illustrated or described here. In addition, the terms "include", "have", and any other variant thereof are intended to cover a non-exclusive inclusion. For example, a process, method, system, product, or device that includes a list of steps or units is not necessarily limited to those steps or units that are expressly listed, but may include other steps or units that are not expressly listed or are inherent to the process, method, system, product, or device.

To make the objectives, technical solutions, and advantages of the embodiments of the present disclosure clearer, the following clearly and completely describes the technical solutions in the embodiments of the present disclosure with reference to the accompanying drawings in the embodiments of the present disclosure. Apparently, the described embodiments are part rather than all of the embodiments of the present disclosure. All other embodiments obtained by those of ordinary skill in the art based on the embodiments of the present disclosure without creative efforts shall fall within the scope of protection of the present disclosure.

FIG. 2 illustrates a schematic flowchart of a communication method provided by the present disclosure.

It is to be noted that the method may be performed by a terminal device, and specifically, may be performed by a MAC entity of the terminal device, which is not limited thereto in the present disclosure.

At S210, the MAC entity of the terminal device determines that a first resource overlaps with a second resource. The first resource is used for carrying an uplink SR. The second resource is used for carrying uplink data.

When the terminal device has data to be transmitted and the SR needs to be transmitted to request an uplink resource from a network device, the MAC entity determines that a valid resource carrying the SR is a first resource. However, before S210, the network device grants the terminal device to transmit the uplink data on the second resource. For example, the first uplink grant is used for the network device to grant the terminal device to transmit the uplink data. The MAC entity of the terminal device determines that the first resource used for carrying the SR overlaps with the second resource used for carrying the uplink data.

At S220, in a case where the first condition is satisfied, the terminal device transmits the SR. The first condition includes the priority of the SR being different from the priority of the first uplink grant, or the first condition includes the priority of the first resource being different from the second resource, the second resource corresponding to the first uplink grant.

The first uplink grant is used for transmitting the uplink data. Optionally, the second resource corresponding to the first uplink grant may refer to that the second resource is the uplink resource that is allocated or granted by the network device for the terminal device and is used for transmitting the uplink data. The uplink resource may be understood as an uplink grant, that is, the first uplink grant. As an example rather than restriction, the second resource is a Physical Uplink Shared Channel (PUSCH) resource or an UpLink-Shared Channel (UL-SCH) resource.

The MAC entity of the terminal device determines whether the first condition is satisfied. In a case where the first condition is satisfied, the terminal device transmits the SR.

Optionally, in a case where it is determined that the first condition is satisfied, one or more of the following are performed:
considering the SR transmission as a prioritized SR transmission, or identifying the SR transmission as prioritized;
considering the first uplink grant as a de-prioritized uplink grant, or identifying the first uplink grant as de-prioritized;
considering the second resource as a de-prioritized uplink grant, or identifying the second resource as de-prioritized; or
determining that the priority of the first uplink grant is lower than the priority of the SR transmission. Optionally, the operation that the terminal device transmits the SR may include that the MAC entity of the terminal device transmits the SR to a PHY layer, or the MAC entity transmits indication information to the PHY layer. The indication information instructs the PHY layer to transmit the SR on the first resource, or the indication information instructs the PHY layer to transmit the SR on a valid resource.

Optionally, the SR is transmitted on the first resource after the PHY layer receives the SR from the MAC entity, or the SR is transmitted to the network device in a case where the PHY layer determines that the condition for transmitting the SR is satisfied.

As an example rather than restriction, the first resource is a Physical Uplink Control Channel (PUCCH).

Optionally, in a case where the priority of the SR is the same as the priority of the first uplink grant, the MAC entity performs one or more of the following:
considering the SR transmission as a de-prioritized SR transmission, the priority of the SR transmission being lower than the first data, the MAC entity not indicating the SR to the PHY layer, or the MAC entity not instructing the PHY layer to transmit the SR on the valid PUCCH resource.

The priority of the SR being the same as the priority of the first uplink grant includes one or more of the following.

The priority of a PHY layer of the SR is the same as the priority of a PHY layer of the first uplink grant.

The priority of a PHY layer of the first resource carrying the SR is the same as the priority of the PHY layer of the second resource carrying the first uplink grant.

That is to say, in a case where the first resource carrying the SR overlaps with the second resource carrying the first uplink grant, the MAC entity of the terminal device compares the priorities of the PHY layers of the first resource and the second resource. When the priorities of the PHY layers of the first resource and the second resource are the same, the SR transmission is considered as de-prioritized, or the SR is identified as de-prioritized.

Optionally, the priority of the uplink scheduling request being different from that of the first uplink grant, or the priority of the first resource being different from that of the second resource includes one or more of the following.

The priority of an LCH of the SR is higher than the priority of the LCH of the first uplink grant.

The priority of the LCH triggering the SR is higher than the priority of the LCH of the first uplink grant.

The priority of the LCH triggering the SR is higher than the priority of the first uplink grant.

That is to say, in a case where the first resource carrying the SR overlaps with the second resource carrying the first uplink grant, the MAC entity of the terminal device considers the priority of the LCH. The MAC entity takes the priority of the LCH of the SR or the priority of the LCH triggering the SR being higher than the priority of the LCH of the first uplink grant or the priority of the LCH of the SR being higher than the priority of the first uplink grant as one of the conditions for considering the SR as de-prioritized.

Optionally, the first condition further includes one or more of the following.

The priority of a PHY layer of the SR is different from the priority of the first PHY layer of the first uplink grant.

The priority of a PHY layer of the SR is higher than the priority of a PHY layer of the first uplink grant.

The priority of the PHY layer of the SR is different from the priority of a PHY layer of the first data.

The priority of the PHY layer of the SR is higher than the priority of a PHY layer of the first data.

The priority of the PHY layer of the first resource is different from the priority of the PHY layer of the first uplink grant.

The priority of the PHY layer of the first resource is higher than the priority of the PHY layer of the first uplink grant.

The SR can be transmitted by the PHY layer or a lower layer of an MAC layer.

It is determined, according to the priority of the PHY layer, that the SR can be transmitted by the PHY layer or the lower layer of the MAC layer.

It is determined, according to the priority of the PHY layer, that the SR can be transmitted.

The SR can be transmitted.

For example, in a case where the first resource overlaps with the second resource, the MAC entity compares the priority of the PHY layer of the SR and the priority of the PHY layer of the first uplink grant. In a case where the priority of the PHY layer of the SR is the same as the priority of the PHY layer of the first data, the MAC entity considers that the SR transmission is a de-prioritized SR transmission, and the SR is not transmitted to the physical layer. In a case where the priority of the PHY layer of the SR is different from the priority of the PHY layer of the first data, the MAC entity compares the priority of an LCH of the SR and the priority of the first uplink grant to determine whether to transmit the SR to a PHY layer. In a case where the priority of the LCH of the SR is higher than the priority of the first uplink grant, the MAC entity considers that the SR transmission is a prioritized SR transmission or identifies the SR transmission as prioritized, and transmits the SR to the PHY layer. Optionally, in a case where the priority of the LCH of the SR is lower than or equal to the priority of the first uplink grant, the MAC entity considers that the SR transmission is a de-prioritized SR transmission or identifies the SR transmission as de-prioritized, and the MAC entity considers that the first uplink grant is a prioritized uplink grant or identifies the first uplink grant as prioritized, and transmits the first data to the PHY layer, which is not limited thereto in the present disclosure.

Optionally, a terminal device receives first information and second information from a network device. The first information is used for configuring the priority of the PHY layer of the SR or the priority of the PHY layer of the first resource, and the second information is used for configuring the priority of the PHY layer of a first uplink scheduling grant.

As an example rather than restriction, the first information and/or the second information is an MAC Control Element (MAC CE) or a Radio Resource Control (RRC) message.

Optionally, in a case where the abovementioned first condition and the second condition are satisfied simultaneously, the MAC entity of the terminal device considers that the SR is a prioritized SR or identifies the SR as prioritized, and transmits the SR to a PHY layer. The second condition includes one or more of the following.

The MAC entity is configured with the priority of the LCH.

The first resource does not overlap with the resource granted by a second uplink grant.

The priority of the LCH triggering the SR is higher than the priority of the second resource.

For example, when the terminal device has an SR to be transmitted, if the MAC entity is configured with the priority of the LCH, the priority of the LCH may be written as Ich-basedProritizition, the first resource (such as a PUCCH) used for carrying the SR transmission overlaps with the second resource (such as a UL-SCH), the priority of the LCH triggering the SR is higher than the priority of the uplink grant of the first resource, and the triggered SR can be transmitted by a lower layer of the MAC entity, then the MAC entity considers that the SR transmission is a prioritized SR transmission, and considers other uplink grants overlapping with the SR as de-prioritized.

As an example rather than restriction, the uplink data is an MAC PDU, a PUSCH, or a UL-SCH.

Exemplarily, the following related descriptions can be added to a communication standardization protocol.
"Conditions for SR and uplink grant are with different PHY priority, which can be either of the following:
1) The PHY priority of PUCCH for SR is different from the PHY priority of the uplink grant.
2) The pending SR triggered can be transmitted by lower layer.

As long as at least one SR is pending, the MAC entity shall for each pending SR:
1 > For the SR configuration corresponding to the pending SR:
2> when the MAC entity has an SR transmission occasion on the valid PUCCH resource for SR configured; and
3> if the PUCCH resource for the SR transmission occasion overlaps with neither a UL-SCH resource nor an SL-SCH resource; or
3> if the MAC entity is able to perform this SR transmission simultaneously with the transmission of the SL-SCH resource; or
3> if the MAC entity is configured with Ich-basedPrioritization, and the PUCCH resource for the SR transmission occasion does not overlap with an uplink grant received in a Random Access Response nor with a transmission of MSGA payload, and the PUCCH resource for the SR transmission occasion for the pending SR triggered as specfied in clause 5.4.5 overlaps with any other UL-SCH resource(s), and the priority of the logical channel that triggered SR is higher than the priority of the uplink grant(s) for any UL-SCH resource(s) where the uplink grant was not already de-prioritized, and the priority of the uplink grant is determined as specified in clause 5.4.1, and <Condition3 for SR and uplink grant are with different PHY priority>; or
3> if the PUCCH resource for the SR transmission occasion for the pending SR triggered as specfied in clause 5.22.1.5 overlaps with any UL-SCH resource(s) carrying a MAC PDU, and the priority of the triggered SR determined as specified in clause 5.22.1.5 is lower than sl-Prioritizationthres and the value of the highest priority of the logical channel(s) in the MAC PDU is higher than or eqaul to ul-Prioritizationthres, if configured; or
3> if a SL-SCH resource overlaps with the PUCCH resource for the SR transmission occasion for the pending SR triggered as specfied in clause 5.4.5, and the MAC entity is not able to perform this SR transmission simultaneously with the transmission of the SL-SCH resource, and either transmission on the SL-SCH resource is not prioritized as described in clause 5.22.1.3.1 or the priority value of the logical channel that triggered SR is lower than ul-Prioritizationthres, if configured; or
3> if a SL-SCH resource overlaps with the PUCCH resource for the SR transmission occasion for the pending SR triggered as specfied in clause 5.22.1.5, and the MAC entity is not able to perform this SR transmission simultaneously with the transmission of the SL-SCH resource, and the priority of the triggered SR determined as specified in clause 5.22.1.5 is higher than the priority of the MAC PDU determined as specified in clause 5.22.1.3.1 for the SL-SCH resource:
   4> consider the SR transmission as a prioritized SR transmission.
   4> consider the other overlapping uplink grant(s), if any, as a de-prioritized uplink grant(s);
      5> instruct the physical layer to signal the SR on one valid PUCCH resource for SR; 3> else:
   4> consider the SR transmission as a de-prioritized SR transmission."

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

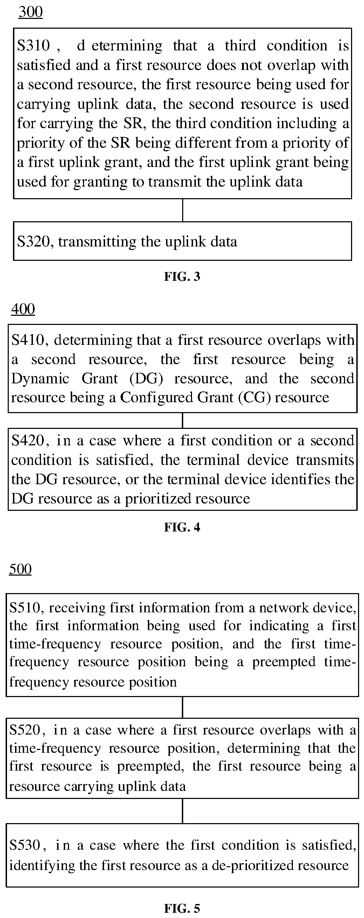

FIG. 3 illustrates another schematic flowchart of the communication method provided by the present disclosure.

It is to be noted that the method may be performed by a terminal device, and specifically, may be performed by a MAC of the terminal device, which is not limited thereto in the present disclosure.

At S310, the terminal device determines that the third condition is satisfied and the first resource does not overlap with the second resource. The first resource is used for carrying uplink data, and the second resource is used for carrying the SR. The third condition includes the priority of the SR being different from the priority of the first uplink grant. The uplink grant is used for transmitting the uplink data.

At S320, the terminal device transmits the uplink data.

The MAC entity of the terminal device determines that the third condition is satisfied at S310, and is configured to transmit the uplink data at S320 in a case where the first resource used for carrying the uplink data does not overlap with the second resource used for carrying the SR.

The third condition includes the priority of the SR being different from the priority of the first uplink grant. That is to say, in a case where the terminal device determines that the first resource used for carrying the uplink data does not overlap with the SR with the priority different from the uplink data, the MAC entity considers that the uplink data is prioritized uplink data.

Optionally, the MAC entity transfers or transmits the uplink data and/or the first uplink grant to a PHY layer. The PHY layer transmits the first data to the network device after receiving the uplink data and/or the first uplink grant.

As an example rather than restriction, the uplink data is an MAC PDU, a PUSCH, or a UL-SCH.

As an example rather than restriction, the first resource is a PUSCH resource or a UL-SCH resource.

As an example rather than restriction, the second resource is a PUCCH resource.

Optionally, the priority of the uplink grant being different from the priority of the SR includes one or more of the following.

The priority of a PHY layer of the SR is higher than the priority of a PHY layer of the first uplink grant.

The priority of the PHY layer of the SR is different from the priority of the PHY layer of the first uplink grant.

The priority of the PHY layer of the SR is different from the priority of a PHY layer of the first resource.

The priority of a PHY layer of the second resource is different from the priority of the PHY layer of the first resource.

The priority of the PHY layer of the SR is higher than the priority of the PHY layer of the first resource.

The priority of the PHY layer of the second resource is higher than the priority of the PHY layer of the first resource.

That is to say, the MAC entity considers the priority of the PHY layer, compares the SR with the first uplink grant, or the first resource with the second resource. In a case where it is determined that the second resource used for carrying the SR satisfying one or more of the abovementioned conditions does not overlap with the first resource of the first uplink grant, the MAC entity considers that the first uplink grant is a prioritized first uplink grant, or considers that the uplink data is prioritized uplink data, or identifies the first uplink grant as prioritized, or identifies the uplink data as prioritized.

Optionally, the priority of the first uplink grant being different from the priority of the SR further includes one or more of the following.

The priority of an LCH of the SR is higher than the priority of the first uplink grant.

The priority of the LCH of the SR is higher than the priority of an LCH of the first uplink grant.

The priority of the LCH of the SR is higher than the priority of the first uplink grant.

The priority of the LCH of the SR is higher than the priority of the LCH of the first uplink grant;

The priority of the LCH triggering the SR is higher than the priority of the LCH of the first uplink grant.

The priority of the LCH triggering the uplink SR is higher than the priority of the first uplink grant.

That is to say, the MAC entity further compares the priority of the LCHs in addition to considering the priority of the PHY layer. The priority of the LCH of the SR and the priority of the first uplink grant may be compared with the priority of the LCH of the first uplink grant, or the priority of the LCH triggering the SR may be compared with the priority of the first uplink grant or the priority of the LCH triggering the SR, so as to consider that the first uplink grant is a prioritized first uplink grant, or consider that the uplink data is prioritized uplink data, or identify the first uplink grant as prioritized, or identify the uplink data as prioritized in a case where it is determined that the second resource used for carrying the SR satisfying one or more of the abovementioned conditions does not overlap with the first resource of the first uplink grant.

Optionally, the third condition further includes one or more of the following.

The MAC entity is configured with the priority of the LCH (for example, written as lch-basedProritizition).

The uplink data can be transmitted by the PHY layer or a lower layer of a MAC layer.

It is determined, according to the priority of the PHY layer, that the uplink data can be transmitted by the PHY layer or the lower layer of the MAC layer.

The SR cannot be transmitted by the PHY layer or the lower layer of the MAC layer.

For example, when the MAC is configured with the priority of the LCH, and the uplink data can be transmitted by the lower layer of the MAC layer, the MAC entity determines that if the first resource carrying the uplink data (such as a PUSCH resource or a UL-SCH resource) does not overlap the second resource carrying a specific SR (such as a PUCCH resource), where the specific SR refers to the priority of the LCH triggering the SR being higher than the priority of the first uplink grant, and the SR can be transmitted by a lower layer, then the MAC entity considers the first uplink grant as a prioritized uplink grant, or identifies the first uplink grant as prioritized.

Optionally, in a case where the third condition is satisfied, and the first resource does not overlap with the second resource, the MAC entity performs an operation of considering other (not satisfying the third condition) SR transmissions overlapping with the first uplink grant are de-prioritized SR transmissions, or the SR transmission with a resource overlapping with that of the first uplink grant being a de-prioritized SR transmission.

Exemplarily, the following related descriptions can be added to a communication standardization protocol.
"When the MAC entity is configured with Ich-basedPrioritization, for each uplink grant whose associated PUSCH can be transmitted by lower layers, the MAC entity shall:
1> if there is no overlapping PUCCH resource with an SR transmission which was not already de-prioritized, and the priority of the logical channel that triggered the SR is higher than the priority of the uplink grant, and the SR can be transmitted by lower layers:
2> consider this uplink grant as a prioritized uplink grant;
2> consider the other overlapping SR transmission(s), if any, as a de-prioritized SR transmission(s)."

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

FIG. 4 illustrates another schematic flowchart of the communication method provided by the present disclosure.

It is to be noted that the method may be performed by a terminal device, and specifically, may be performed by a MAC of the terminal device, which is not limited thereto in the present disclosure.

At S410, a terminal device determines that a first resource overlaps with a second resource. The first resource is a DG resource, and the second resource is a CG resource.

The terminal device determines the first resource according to a UL DG, determines a second resource according to a UL CG, and determines that the first resource overlaps with the second resource.

At S420, in a case where the first condition or the second condition is satisfied, the terminal device transmits the DG, or the terminal device identifies the DG as prioritized.

The first condition includes determining that the DG resource can be transmitted according to the priority of the DG resource and/or the priority of the CG resource.

Further, the CG is identified as de-prioritized.

Optionally, the first condition further includes one or more of the following.

The priority of a PHY layer of the DG is the same as the priority of a PHY layer of the CG.

The CG cannot be transmitted by the PHY layer or a lower layer of a MAC layer.

According to the priority of the PHY layer, the CG cannot be transmitted by the PHY layer or the lower layer of the MAC layer.

For example, when the MAC entity of the terminal device determines that the first resource of the DG overlaps with the second resource of the CG, and the priority of the PHY layer of the DG is the same as the priority of the PHY layer of the CG, the MAC entity considers the DG as a prioritized uplink grant, or identifies the DG as prioritized, or considers that the priority of the DG is higher than the priority of the CG. Alternatively, the MAC entity considers that the first resource is a prioritized uplink grant, or identifies the first resource as prioritized, or considers that the priority of the resource is higher than the priority of the second resource, which is not limited thereto in the present disclosure.

For another example, when the MAC entity of the terminal device determines that the first resource of the DG overlaps with the second resource of the CG, and the CG cannot be transmitted by a lower layer of the MAC entity, then the MAC entity considers that the DG is a prioritized uplink grant, or identifies the DG as prioritized, or considers that the priority of the DG is higher than the priority of the CG. For another example, the MAC entity considers that the first resource is a prioritized uplink grant, or identifies the first resource as prioritized, or considers that the priority of the first resource is higher than the priority of the second resource.

The second condition includes determining that the DG resource can be transmitted according to the priority of the DG resource and/or the priority of the CG resource. Optionally, the second condition includes one or more of the following.

The priority of a PHY layer of the DG is different from the priority of a PHY layer of the CG.

The CG can be transmitted by the PHY layer or a lower layer of the MAC layer.

The DG can be transmitted by the PHY layer or the lower layer of the MAC layer.

According to the priority of the PHY layer, the DG can be transmitted by the PHY layer or the lower layer of the MAC layer.

According to the priority of the PHY layer, the CG can be transmitted by the PHY layer or the lower layer of the MAC layer.

The priority of the PHY layer of the DG is higher than the priority of the PHY layer of the CG.

The priority of the LCH of the DG is higher than the priority of the LCH of the CG.

For example, when the MAC entity of the terminal device determines that the first resource of the DG overlaps with the second resource of the CG, the priority of the PHY layer of the DG is different from the priority of the PHY layer of the CG, and the priority of the LCH of the DG is higher than the priority of the LCH of the CG, the MAC entity considers the DG as a prioritized uplink grant, or identifies the DG as prioritized, or considers that the priority of the DG is higher than the priority of the CG. Alternatively, the MAC entity considers that the first resource is a prioritized uplink grant, or identifies the first resource as prioritized, or considers that the priority of the resource is higher than the priority of the second resource, which is not limited thereto in the present disclosure.

For another example, when the MAC entity of the terminal device determines that the first resource of the DG overlaps with the second resource of the CG, and the CG cannot be transmitted by a lower layer of the MAC entity or can be transmitted by the lower layer of the MAC entity according to the priority of a PHY layer, then the MAC entity considers that the DG is a prioritized uplink grant, or identifies the DG as prioritized, or considers that the priority of the DG is higher than the priority of the CG. For another example, the MAC entity considers that the first resource is a prioritized uplink grant, or identifies the first resource as prioritized, or considers that the priority of the first resource is higher than the priority of the second resource.

Exemplarily, the following related descriptions can be added to a communication standardization protocol.
"Condition1:
   If there is overlapping PUSCH duration of a configured uplink grant which was not already de-prioritized, in the same BWP whose PHY priority is same as PHY priority of the uplink grant;
   If there is overlapping PUSCH duration of a configured uplink grant which was not already de-prioritized, in the same BWP which can not be transmitted by lower layer.
Condition2 :
   The PHY priority of the configured uplink grant is different from the PHY priority of the uplink grant.
   The configured uplink grant can be transmitted by lower layer.
   When the MAC entity is configured with Ich-basedPrioritization, for each uplink grant whose associated PUSCH can be transmitted by lower layers, the MAC entity shall:
      1> if this uplink grant is addressed to CS-RNTI with NDI = 1 or C-RNTI:
         2> if there is no overlapping PUSCH duration of a configured uplink grant which was not already de-prioritized, in the same BWP whose priority is higher than the priority of the uplink grant, and <Condition2 for CG and DG are with different PHY priority>; or < Condition1 for CG and DG are with same PHY priority >; and
         3> consider this uplink grant as a prioritized uplink grant;
         3> consider the other overlapping uplink grant(s), if any, as a de-prioritized uplink grant(s);
      1> else if this uplink grant is a configured uplink grant:
         2> if there is no overlapping PUSCH duration of another configured uplink grant which was not already de-prioritized, in the same BWP, whose priority is higher than the priority of the uplink grant; and
         3> consider this uplink grant as a prioritized uplink grant;
         3> consider the other overlapping uplink grant(s), if any, as a de-prioritized uplink grant(s);"

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

FIG. 5 illustrates another schematic flowchart of the communication method provided by the present disclosure.

It is to be noted that the method may be performed by a terminal device, and specifically, may be performed by a MAC of the terminal device, but the present disclosure is not limited thereto.

At S510, a first terminal device receives first information from a network device. The first information is used for indicating a first time-frequency resource position, and the first time-frequency resource position is a preempted time-frequency resource position.

Optionally, the first information may be referred to as uplink Cancellation Information (CI) or UL CI.

The first condition includes the first terminal device being configured with the uplink CI. Optionally, the uplink CI is carried in an RRC message from the network device. The uplink CI is used for configuring the first terminal device to receive the first information. Alternatively, the first condition includes that the first terminal device receives uplink cancellation indication information. Further, the uplink cancellation indication may be included in Downlink Control Information (DCI).

At S520, in a case where the first resource overlaps with a time-frequency resource position, it is determined that the first resource is preempted, and the first resource is a resource carrying the uplink data.

The terminal device intends to transmit uplink data on the first resource, and determines that the first resource overlaps with the time-frequency resource position after receiving the first information, so as to determine that the first resource is preempted or discarded, or cannot be used for transmitting the uplink data. At S520, in a case where the first condition is satisfied, the first terminal device identifies the first resource as de-prioritized.

For example, the first terminal device is granted to transmit uplink data on the first resource, then a network device receives the first information, the first information indicating that the time-frequency resource position includes a resource that is occupied or preempted by other high-priority resource, and the time-frequency resource position overlaps with the first resource that needs to carry the uplink data, and then it is determined that first resource is discarded or preempted, or cannot be used for transmitting the uplink data. That is to say, the first information indicates that the first resource is discarded, the first resource is preempted, or the first resource cannot be used for transmitting the uplink data. In a case where the abovementioned first condition is satisfied, the first terminal considers that the first resource is a de-prioritized resource or identifies the first resource as de-prioritized, or considers that an uplink grant as a de-prioritized uplink grant or identifies the uplink grant as de-prioritized.

Optionally, the time-frequency resource position includes a second resource. The second resource is a resource used a second terminal device to transmit data. That is to say, the network device transmits the first information to notify the first terminal device because the second terminal device preempts the second resource. In a case where the first condition is satisfied, the first terminal device and/or the second terminal identifies the second resource as prioritized, or the terminal device determines that the priority of the second resource is higher than the priority of the first resource.

Exemplarily, the following related descriptions can be added to a communication standardization protocol.

"Note: The uplink grant is considered as a de-prioritized uplink grant if it is overlapped with the resource indicated by UL CI."

Optionally, the first condition further includes the priority of the first resource being first priority. The first priority is a priority in a priority set. The priority set at least includes the first priority and second priority. The first priority is lower than the second priority. Alternatively, the first condition includes that the first resource being configured or being indicated as de-prioritized. Optionally, the first priority is the priority of an LCH and/or the priority of a PHY layer.

Optionally, the first condition further includes that the terminal device is configured with the priority of the first information. For example, the network device configures the priority of the first information for the terminal device through uplinkCancellationPriority, or the uplinkCancellationPriority is enabled.

For example, in a case where the first terminal is configured with Cancellation information, the uplinkCancellationPriority is enabled, and the second resource used for transmitting the uplink data overlaps with the first resource indicated by UL CI and the second resource is the first priority (or de-prioritized), then it is considered that the uplink grant is a de-prioritized uplink grant, or it is considered that the second resource is a de-prioritized uplink resource.

Exemplarily, the following related descriptions can be added to a protocol.

"Note: The uplink grant is considered as a de-prioritized uplink grant if it is overlapped with the resource indicated by UL CI, and uplinkCancellationPriority is enabled, and the priority of the uplink grant is low."

According to the abovementioned solution, in a case of a transmission resource transmitting conflict, the terminal device or the MAC entity of the terminal device determines a signal or information to be transmitted preferentially according to a preset condition (for example, a first condition and/or a second condition), which can reduce the deterioration of communication quality due to resource conflicts, and improve the reliability of communication.

In addition, the following is another communication method provided by the embodiments of the present disclosure, which will be described below in detail.

In a case where the terminal device performs replicated data transmission on more than two Radio Link Control (RLC) entities or more than two LCHs, or in a case where the duplicated data is transmitted in a Carrier Aggregation (CA) transmission mode in combination with a Dual Connectivity (DC) transmission mode, it is determined to use or not use an LCH mapping restriction on the LCHs or the RLC entities.

The LCH mapping restriction is used for restricting a carrier used when the LCHs transmit data.

Optionally, the more than two RLC entities are associated with one or more MAC entities, or more than two LCHs are associated with one or more MAC entities.

Optionally, the more than two RLC entities are associated with one Data Radio Bearer (DRB) or Signaling Radio Bearer (SRB).

Optionally, if one MAC entity is only associated with one LCH/if one MAC entity is associated with one LCH, and duplication transmission is deactivated or the duplication transmission corresponding to the MAC entity is deactivated, the LCH mapping restriction is maintained or used on the LCH associated with the MAC entity. And/or, if one MAC entity is only associated with one LCH/and if one MAC entity is associated with one LCH, and duplication transmission is activated or the duplication transmission corresponding to the MAC entity is activated, the LCH mapping restriction is maintained or used on the LCH associated with the MAC entity.

Optionally, if one MAC entity is associated with a plurality of LCHs, duplication transmission is deactivated or the duplication transmission corresponding to the MAC entity is deactivated, and there are a plurality of activated LCHs in the LCHs associated with the MAC entity, the LCH mapping restriction is maintained or used on the LCHs associated with the MAC entity. Alternatively, if one MAC entity is associated with a plurality of LCHs, and there are a plurality of activated LCHs in the LCHs associated with the MAC entity, the LCH mapping restriction is maintained or used on the LCHs associated with the MAC entity.

Optionally, if one MAC entity is associated with a plurality of LCHs, duplication transmission is deactivated or the duplication transmission corresponding to the MAC entity is deactivated, and there is only one activated LCH in the LCHs associated with the MAC entity, then the LCHs associated with the MAC entity do not use the LCH mapping restriction. Alternatively, if one MAC entity is associated with a plurality of LCHs, and if there is only one activated LCH in the LCHs associated with the MAC entity, then the LCHs associated with the MAC entity do not use the LCH mapping restriction.

Optionally, if one MAC entity is associated with a plurality of LCHs, duplication transmission is deactivated or the duplication transmission corresponding to the MAC entity is deactivated, and there is no activated LCH in the LCHs associated with the MAC entity, then the LCHs associated with the MAC entity do not use the LCH mapping restriction. Alternatively, if one MAC entity is associated with a plurality of LCHs, and there is no activated LCH in the LCHs associated with the MAC entity, then the LCHs associated with the MAC entity do not use the LCH mapping restriction.

Optionally, the abovementioned one MAC entity is any one MAC entity of one or more MAC entities associated with the abovementioned more than two LCHs.

Optionally, the terminal device receives first information from the network device. The first information is used for configuring the LCH mapping restriction, and the LCH mapping restriction is configured by taking an LCH as a unit or taking an RLC entity as a unit. Optionally, the first information may be referred to as serving cells allowed to be transmitted, which may be written as *allowedServingCells.*

Specifically, if one MAC entity is associated with a plurality of LCHs, in a case where duplication transmission is deactivated or the duplication transmission corresponding to the MAC entity is deactivated, and there are a plurality of activated LCHs in the activated associated with the MAC entity, the LCH mapping restriction is maintained or used on the LCHs (including activated LCHs and deactivated LCHs) associated with the MAC entity; or in a case where duplication transmission is deactivated or the duplication transmission corresponding to the MAC entity is deactivated, and there is only one or no activated LCH in the LCHs associated with the MAC entity, the LCH mapping restriction is not used on the LCH associated with the MAC entity.

Exemplarily, the following related descriptions can be added to a communication standardization protocol.

"When CA duplication is deactivated for a DRB, the logical channel mapping restrictions of the primary and secondary logical channels are lifted for as long as duplication remains deactivated. In DC+CA duplication, for the MAC entity associating with multiple LCHs, if there are more than one LCH being activated, the LCH mapping restriction for the LCHs is kept (including both LCH activated and deactived) as long as duplication associated with this MAC entity remains activated; otherwise, it is lifted as long as duplication associated with this MAC entity remains deactivated."

Exemplarily, the following related descriptions can be added to a communication standardization protocol.

"*allowedServingCells*, if configured, includes the Cell information associated to the UL grant. Does not apply to logical channels associated with a DRB configured with PDCP duplication within the same MAC entity (i.e. CA duplication) for which PDCP duplication is deactivated. Does not apply to logical channels associated with a MAC entity of a DRB configured with DC+CA PDCP duplication to which multiple logical channels are associated when PDCP duplication associated with the MAC entity is deactivated;" or

"*allowedServingCells*, if configured, includes the Cell information associated to the UL grant. Does not apply to logical channels associated with a DRB configured with PDCP duplication within the same MAC entity (i.e. CA duplication) for which PDCP duplication is deactivated. Does not apply to logical channels associated with a MAC entity of a DRB configured with DC+CA duplication when the MAC entity associates with multiple logical channels and no more than one logical channel of the MAC entity is activated; and"

According to the abovementioned solution, when the activation or deactivation of duplicate transmissions of more than two LCHs are different, the carrier that can be used for data transmission of LCHs corresponding to the bearer is specified, to ensure diversity gain or prevent inappropriate carriers from being used for the transmission of the data, thereby ensuring the reliability of data transmission.

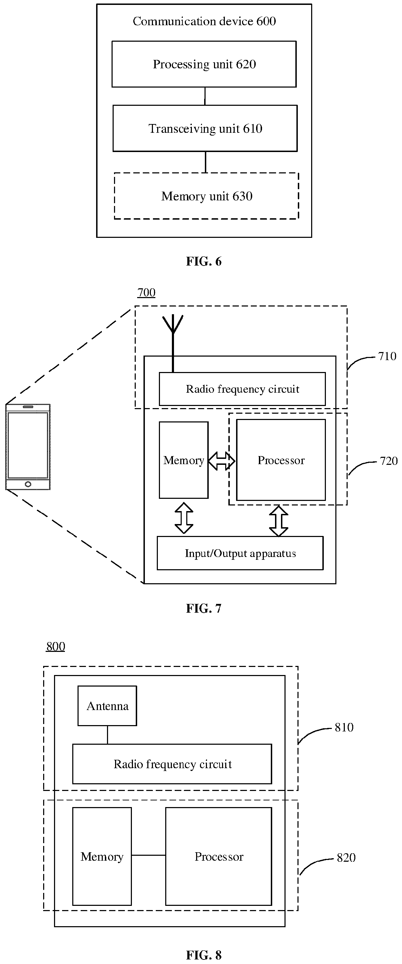

The method provided by the embodiments of the present disclosure is described above in detail with reference to FIG. 2 to FIG. 5. The device provided by the embodiments of the present disclosure is described below in detail with reference to FIG. 6 to FIG. 8.

FIG. 6 illustrates a schematic block diagram of a communication device provided by an embodiment of the present disclosure. As illustrated in FIG. 6, the communication device 600 may include a processing unit 610 and a transceiving unit 620.

In a possible design, the communication device 600 may correspond to the terminal device in the method embodiments above, or may be a chip configured (or used) in the terminal device.

It is to be understood that the communication device 600 may correspond to the terminal devices in the methods 200, 300, 400, and 500 according to the embodiments of the present disclosure. The communication device 600 may include units for performing the methods performed by the terminal devices in the methods 200, 300, 400, and 500 in FIG. 2, FIG. 3, FIG. 4, and FIG. 5. Moreover, various units in the communication device 600 and other operations and/or functions mentioned above are separately for implementing a corresponding process in the method 200 in FIG. 2.

It is also to be understood that, when the communication device 600 is configured (or used) in a chip in the terminal device, the transceiving unit 620 in the communication device 600 may be an input/output interface or circuit of the chip. The processing unit 610 in the communication device 600 may be a processor in the chip.

Optionally, the communication device 600 may further include a processing unit 610. The processing unit 610 may be configured to process instructions or data to realize corresponding operations.

Optionally, the communication device 600 may further include a storage unit 630. The storage unit 630 may be configured to store instructions or data. The processing unit 610 may execute the instructions or data stored in the storage unit, so that the communication device realizes corresponding operations. The transceiving unit 620 in the communication device 600 may be a transceiver 710 in the terminal device 700 as illustrated in FIG. 7. The storage unit 630 may correspond to a memory in the terminal device 700 as illustrated in FIG. 7.

It is to be understood that a specific process that various units execute the abovementioned corresponding steps has been described in detail in the abovementioned method embodiments, which will not be elaborated wherein for simplicity.

It is also to be understood that when the communication device 600 is a terminal device, the transceiving unit 620 in the communication device 600 may be implemented through a communication interface (such as a transceiver or an input/output interface), for example, may correspond to a transceiver 710 in the terminal device 700 as illustrated in FIG. 7. The processing unit 610 in the communication device 600 may be implemented through at least one processor, for example, may correspond to the processor 720 in the terminal device 700 as illustrated in FIG. 7. The processing unit 610 in the communication device 600 may be implemented through at least one logical circuit.

In another possible design, the communication device 600 may correspond to a network device in the above method embodiments, for example, or may be a chip configured (or used) in a network device.

It is to be understood that the communication device 600 may correspond to the network devices in the methods 200, 300, 400, and 500 according to the embodiments of the present disclosure. The communication device 600 may include units for performing the methods performed by the network devices in the methods 200, 300, 400, and 500 in FIG. 2, FIG. 3, FIG. 4, and FIG. 5. Moreover, various units in the communication device 600 and other operations and/or functions mentioned above are separately for implementing corresponding processes in the methods 200, 300, 400, and 500 in FIG. 2, FIG. 3, FIG. 4, and FIG. 5.

It is also to be understood that, when the communication device 600 is a chip configured (or used) in the network device, the transceiving unit in the communication device 600 may be an input/output interface or circuit in the chip. The processing unit 610 in the communication device 600 may be a processor in the chip.

Optionally, the communication device 600 may further include a processing unit 610. The processing unit 610 may be configured to process instructions or data to realize corresponding operations.

Optionally, the communication device 600 may further include a storage unit 630. The storage unit may be configured to store instructions or data. The processing unit may execute the instructions or data stored in the storage unit 630, so that the communication device implements corresponding operations. The storage unit 630 in the communication device 600 may correspond to a memory in the network device 800 as illustrated in FIG. 8.

It is to be understood that a specific process that various units execute the abovementioned corresponding steps has been described in detail in the abovementioned method embodiments, which will not be elaborated wherein for simplicity.

It is also to be understood that when the communication device 600 is a network device, the transceiving unit 620 in the communication device 600 may be implemented through a communication interface (such as a transceiver or an input/output interface), for example, may correspond to a transceiver 810 in the network device 800 as illustrated in FIG. 8. The processing unit 610 in the communication device 600 may be implemented through at least one processor, for example, may correspond to the processor 820 in the network device 800 as illustrated in FIG. 8. The processing unit 610 in the communication device 600 may be implemented through at least one logical circuit.

FIG. 7 illustrates a schematic structural diagram of the terminal device 600 provided by the embodiments of the present disclosure. The terminal device 700 may be applied to a system as illustrated in FIG. 1 to execute the functions of the terminal device in the abovementioned method embodiments. As illustrated in the figure, the terminal device 700 includes a processor 720 and a transceiver 710. Optionally, the terminal device 700 may further include a memory. The processor 720, the transceiver 710, and the memory communicate with each other by using an internal connection channel, so as to transmit control and/or data signals. The memory is configured to store a computer program. The processor 720 is configured to execute the computer program in the memory, so as to control the transceiver 710 to transmit and/or receive signals.

The abovementioned processor 720 and the memory may be combined into a processing device. The processor 720 is configured to execute a program code stored in the memory to realize the abovementioned functions. In specific implementation, the memory may also be integrated in the processor 720, or may be independent of the processor 720. The processor 720 may correspond to the processing unit in FIG. 6.

The abovementioned transceiver 710 may correspond to the transceiving unit in FIG. 6. The transceiver 710 may include a receiver (or referred to as a receiving machine or a receiving circuit) and a transmitter (or referred to as a transmitting machine or a transmitting circuit). The receiver is configured to receive a signal, and the transmitter is configured to transmit a signal.

It is to be understood that the terminal device 700 illustrated in FIG. 7 can implement various processes of the terminal device involved in the embodiments of the methods 200, 300, 400, and 500 in FIG. 2, FIG. 3, FIG. 4, and FIG. 5. Operations and/or functions of various modules in the terminal device 700 are intended to respectively implement corresponding processes in the abovementioned method embodiments. Specific reference may be made to the description in the abovementioned method embodiments. To avoid repetition, detailed descriptions are omitted herein as appropriate.

The abovementioned processor 720 may be configured to perform the actions internally implemented by the terminal device described in the previous method embodiments, while the transceiver 710 may be configured to perform the actions that the terminal device described in the previous method embodiment transmits to the network device or receives from the network device. Reference is made to the description in the previous method embodiments for details, which will not be elaborated herein.

Optionally, the abovementioned terminal device 700 may further include a power supply, which is configured to supply power for various devices or circuits in the terminal device.

In addition, in order to made the functions of the terminal device more perfect, the terminal device 700 may further include one or more of an input unit, a display unit, an audio circuit, a camera, a sensor, etc. The audio circuit may also include a speaker, a microphone, etc.

FIG. 8 illustrates a schematic structural diagram of the network device provided by the embodiments of the present disclosure. The network device 800 may be applied to a system as illustrated in FIG. 1 to execute the functions of the network device in the abovementioned method embodiments. For example, FIG. 8 may be a schematic diagram of related structures of the network device.

It is to be understood that the network device 800 as illustrated in FIG. 8 can implement various processes involving the network device in the methods 200, 300, 400, and 500 in FIG. 2, FIG. 3, FIG. 4, and FIG. 5. Operations and/or functions of various modules in the network device 800 are intended to respectively implement corresponding processes in the abovementioned method embodiments. Specific reference may be made to the description in the abovementioned method embodiments. To avoid repetition, detailed descriptions are omitted herein as appropriate.

It is to be understood that the network device 800 as illustrated in FIG. 8 is only possible architecture of the network device, and does not constitute any limitation to the present disclosure. The method provided by the present disclosure is applicable to the network devices of other architectures. For example, the method is applicable to the network devices, including CU, DU, and AAU, and the like. No limits are made to specific architecture of the network device in the present disclosure.

An embodiment of the present disclosure further provides a processing device, including a processor and an interface. The processor is configured to perform the method in any one of the abovementioned method embodiments.

It is to be understood that the abovementioned processing device may be one or more chips. For example, the processing device may be a Field Programmable Gate Array (FPGA), an Application Specific Integrated Circuit (ASIC), a System on Chip (SoC), a Central Processor Unit (CPU), or a Network Processor (NP), a Digital Signal Processor (DSP), a Micro Controller Unit (MCU), a Programmable Logic Device (PLD) or other integrated chips.

During implementation, various steps of the abovementioned method may be completed by an integrated logical circuit of hardware in the processor or an instruction in the form of software. The steps of the method disclosed with reference to the embodiments of the present disclosure may be directly performed and completed by a hardware processor, or may be performed and completed by using a combination of hardware in the processor and a software module. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor. To avoid repetition, details are not described in detail herein.

It is to be noted that the processor in the embodiments of the present disclosure may be an integrated circuit chip with signal processing capacity. In an implementation process, various steps of the abovementioned method embodiments may be completed by an integrated logic circuit of hardware in the processor or an instruction in the form of software. The abovementioned processor may be a general-purpose processor, a Digital Signal Processor (DSP), an ASIC, an FPGA or other programmable logic devices, a discrete gate, or a transistor logic device, or a discrete hardware component. Various methods, steps, and logical block diagrams of the disclosure in the embodiments of the present disclosure may be implemented or performed. The general-purpose processor may be a microprocessor, any conventional processor, or the like. Steps of the methods disclosed with reference to the embodiments of the present disclosure may be directly performed and accomplished by a hardware decoding processor, or may be performed and accomplished by a combination of hardware and software modules in the decoding processor. The software module may be located in a storage medium mature in the art, such as a random access memory, a flash memory, a read-only memory, a programmable read-only memory or electrically erasable programmable memory, or a register. The storage medium is located in the memory, and the processor reads information in the memory and completes the steps in the foregoing methods in combination with hardware of the processor.

It may be understood that the memory in the embodiments of the present disclosure may be a volatile memory or a nonvolatile memory, or may include a volatile memory and a nonvolatile memory. The nonvolatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which is used as an external cache. By way of example but not restrictive description, many forms of RAMs may be used, for example, a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described in this specification includes but is not limited to these and any other proper types of memories.

According to the method provided by the embodiments of the present disclosure, the present disclosure further provide a computer program product. The computer program product includes a computer program code. When the computer program code is run by one or more processors, an device including the processor performs the method in the abovementioned embodiments.

According to the method provided by the embodiments of the present disclosure, the present disclosure further provides a computer-readable storage medium. The computer-readable storage medium stores a program code. When the program code is run by one or more processors, an device including the processor performs the method in the abovementioned embodiments.

According to the method provided by the embodiments of the present disclosure, the present disclosure further provides a system, which includes the foregoing one or more network devices. The system may further include the foregoing one or more terminal devices.

### Additional examples

In example 1, there is provided a communication method, comprising:
determining that a first resource overlaps with a second resource, wherein the first resource is used for carrying an uplink Scheduling Request (SR), and the second resource is used for carrying uplink data; and
in a case where a first condition is satisfied, transmitting the uplink SR,
wherein the first condition comprises a priority of the uplink SR being different from a priority of a first uplink grant and the first uplink grant being used for transmitting the uplink data; or the first condition comprises a priority of the first resource being different from a priority of the second resource and the second resource corresponding to the first uplink grant.

In example 2, the method of example 1, wherein the priority of the uplink SR being different from the priority of the first uplink grant, or the priority of the first resource being different from the priority of the second resource comprises:
a priority of a Logical Channel (LCH) of the uplink SR being higher than a priority of an LCH of the first uplink grant; or
a priority of an LCH triggering the uplink SR being higher than the priority of the LCH of the first uplink grant; or
the priority of the LCH triggering the uplink SR being higher than the priority of the first uplink grant.

In example 3, the method of example 2, wherein the first condition further comprises one or more of the following:
a priority of a Physical (PHY) layer of the uplink SR being different from a priority of a PHY layer of the first uplink grant;
the priority of the PHY layer of the uplink SR being higher than the priority of the PHY layer of the first uplink grant;
a priority of a PHY layer of the first resource being different from the priority of the PHY layer of the first uplink grant;
the priority of the PHY layer of the first resource being higher than the priority of the PHY layer of the first uplink grant;
the uplink SR being transmittable by a PHY layer or a lower layer of a Media Access Control (MAC) layer;
determining, according to a priority of the PHY layer, that the uplink SR is transmittable by the PHY layer or the lower layer of the MAC layer; or
determining, according to the priority of the PHY layer, that the uplink SR is transmittable.

In example 4, the method of any one of examples 1 to 3, further comprising:
in a case where the priority of the PHY layer of the uplink SR is same as the priority of the PHY layer of the first uplink grant, identifying the uplink SR as a de-prioritized uplink SR, or determining that the priority of the uplink SR is lower than the priority of the uplink grant; or
in a case where the priority of the PHY layer of the first resource is same as the priority of the PHY layer of the first uplink grant, identifying the uplink SR as a de-prioritized uplink SR, or determining that the priority of the uplink SR is lower than the priority of the uplink grant; or
in a case where the priority of the PHY layer of the uplink SR is same as the priority of the PHY layer of the first uplink grant, identifying the first uplink grant as a prioritized uplink grant, or identifying the second resource as a prioritized resource; or
in a case where the priority of the PHY layer of the first resource is same as the priority of the PHY layer of the first uplink grant, identifying the first uplink grant as a prioritized uplink grant, or identifying the second resource as a prioritized resource.

In example 5, the method of example 3 or 4, further comprising:
receiving first information and second information from a network device, the first information being used for configuring the priority of the PHY layer of the first uplink SR or the priority of the PHY layer of the first resource, and the second information being used for configuring the priority of the PHY layer of the first uplink grant.

In example 6, the method of any one of examples 1 to 5, further comprising:
in a case where the first condition is not satisfied, identifying the uplink data as prioritized uplink data.

In example 7, the method of any one of examples 1 to 6, wherein transmitting the uplink SR information comprises:
in a case where a second condition is satisfied, transmitting the uplink SR, or identifying the uplink SR as a prioritized uplink SR,
wherein the second condition comprises at least one of the following:
   an MAC entity being configured with a priority of an LCH;
   the first resource not overlapping with a resource granted by a second uplink grant; or
   the priority of the LCH triggering the uplink SR being higher than the priority of the second resource.

In example 8, the method of any one of examples 1 to 7, wherein the uplink data is a MAC Protocol Data Unit (PDU), a Physical Uplink Shared Channel (PUSCH), or an Uplink Shared Channel (UL-SCH).

In example 9, there is provided a communication method, comprising:
determining that a third condition is satisfied and a first resource does not overlap with a second resource, wherein the first resource is used for carrying uplink data, the second resource is used for carrying an uplink Scheduling Request (SR), the third condition comprises a priority of a first uplink grant being different from a priority of the uplink SR, and the first uplink grant is used for transmitting the uplink data; and
transmitting the uplink data.

In example 10, the method of example 9, wherein the priority of the first uplink grant being different from the priority of the uplink SR comprises one or more of the following:
a priority of a Physical (PHY) layer of the uplink SR being higher than a priority of a PHY layer of the first uplink grant;
the priority of the PHY layer of the uplink SR being different from the priority of the PHY layer of the first uplink grant;
the priority of the PHY layer of the uplink SR being different from a priority of a PHY layer of the first resource;
a priority of a PHY layer of the second resource being different from the priority of the PHY layer of the first resource;
the priority of the PHY layer of the uplink SR being higher than the priority of the PHY layer of the first resource;
the priority of the PHY layer of the second resource being higher than the priority of the PHY layer of the first resource;
a priority of a Logical Channel (LCH) of the uplink SR being higher than the priority of the first uplink grant;
the priority of the LCH of the uplink SR being higher than a priority of an LCH of the first uplink grant;
a priority of an LCH triggering the uplink SR being higher than the priority of the LCH of the first uplink grant;
the priority of the LCH triggering the uplink SR being higher than the priority of the first uplink grant;
the uplink data being transmittable by a PHY layer or a lower layer of a Media Access Control (MAC) layer; or
the uplink SR being transmittable by the PHY layer or the lower layer of the MAC layer.

In example 11, the method of example 9 or 10, wherein transmitting the uplink data comprises:
in a case where a fourth condition is satisfied, transmitting the uplink data, or identifying the uplink data as prioritized uplink data,
wherein the fourth condition comprises one or more of the following:
   an MAC entity being configured with a priority of an LCH;
   the uplink data being transmittable by a PHY layer or a lower layer of a MAC layer; or
   the uplink SR being not transmittable by the PHY layer or the lower layer of the MAC layer.

In example 12, there is provided a communication method, comprising:
receiving, by a first terminal device, first information from a network device, wherein the first information is used for indicating a first time-frequency resource position, and the first time-frequency resource position is a preempted time-frequency resource position;
determining, by the first terminal device, that a first resource is preempted in a case where the first resource overlaps with the time-frequency resource position, wherein the first resource is a resource carrying uplink data; and
in a case where the first condition is satisfied, identifying, by the first terminal device, the first resource as a de-prioritized resource,
wherein the first condition comprises the first terminal device being configured with uplink cancellation configuration information or being indicated with uplink cancellation information.

In example 13, the method of example 12, wherein the first condition further comprises the priority of the first resource being a first priority, the first priority being a priority in a priority set, and the priority set at least comprising the first priority and a second priority, wherein the first priority is lower than the second priority.

In example 14, the method of example 13, wherein the first priority is at least one of a priority of a Logical Channel (LCH) or a priority of a Physical (PHY) layer.

In example 15, the method of example 13 or 14, wherein the first condition further comprises one or more of the following:
a Media Access Control (MAC) entity being configured with a priority of an LCH; or
configuration information of the first terminal device comprising priority information of the first information, or the priority information of the first information in the configuration information of the first terminal device being enabled.

In example 16, the method of any one of examples 12 to 15, wherein the time-frequency resource position comprises a second resource, the second resource is a resource used by a second terminal device to transmit data, in a case where the first condition is satisfied, the first terminal device identifies the second resource as a prioritized resource, or the terminal device determines that a priority of the second resource is higher than the priority of the first resource.

In example 17, there is provided a communication method, comprising:
determining that a first resource overlaps with a second resource, wherein the first resource is a Dynamic Grant (DG) resource, and the second resource is a Configured Grant (CG) resource; and
in a case where a first condition or a second condition is satisfied, transmitting the DG resource, or identifying the DG resource as a prioritized resource, wherein the first condition or the second condition at least comprises determining that the DG resource is transmittable according to at least one of the priority of the DG resource or the priority of the CG resource.

In example 18, the method of example 17, wherein the first condition comprises one or more of the following:
a priority of a Physical (PHY) layer of the DG resource being same as a priority of a PHY layer of the CG resource;
the CG resource being not transmittable by a PHY layer or a lower layer of a Media Access Control (MAC) layer; or
according to the priority of the PHY layer, the CG resource being not transmittable by the PHY layer or the lower layer of the MAC layer.

In example 19, the method of example 17, wherein the second condition comprises one or more of the following:
a priority of a PHY layer of the DG resource being different from a priority of a PHY layer of the CG resource;
the CG resource being transmittable by a PHY layer or a lower layer of a MAC layer;
the DG resource being transmittable by the PHY layer or the lower layer of the MAC layer;
according to the priority of the PHY layer, the DG resource being transmittable by the PHY layer or the lower layer of the MAC layer;
according to the priority of the PHY layer, the CG resource being transmittable by the PHY layer or the lower layer of the MAC layer;
the priority of the DG resource being higher than the priority of the PHY layer of the CG resource; or
a priority of a Logical Channel (LCH) of the DG resource being higher than a priority of an LCH of the CG resource.

In example 20, there is provided a communication method, comprising:
in a case where more than two Radio Link Control (RLC) entities or more than two Logical Channels (LCHs) transmit duplicated data, or in a case where the duplicated data is transmitted in a Carrier Aggregation (CA) transmission mode in combination with a Dual Connectivity (DC) transmission mode, determining to use or not use an LCH mapping restriction on the LCHs or the RLC entities, wherein the LCH mapping restriction is used for restricting a carrier used when the LCHs transmit data.

In example 21, the method of example 20, wherein the more than two RLC entities are associated with one or more Media Access Control (MAC) entities, or the more than two LCHs are associated with one or more MAC entities.

In example 22, the method of example 20, wherein the more than two RLC entities are associated with one bearer, or the more than two LCHs are associated with one bearer.

In example 23, the method of example 21, wherein in a case where one MAC entity is only associated with one LCH, and duplication transmission is deactivated or duplication transmission corresponding to the MAC entity is deactivated, the LCH mapping restriction is maintained or used on the LCH associated with the MAC entity; and/or in a case where one MAC entity is only associated with one LCH, and duplication transmission is activated or the duplication transmission corresponding to the MAC entity is activated, the LCH mapping restriction is maintained or used on the LCH associated with the MAC entity.

In example 24, the method of example 21, wherein
in a case where one MAC entity is associated with a plurality of LCHs, duplication transmission is deactivated or the duplication transmission corresponding to the MAC entity is deactivated, and there are a plurality of activated LCHs in the LCHs associated with the MAC entity, the LCH mapping restriction is maintained or used on the LCHs associated with the MAC entity; or
in a case where one MAC entity is associated with a plurality of LCHs, and there are a plurality of activated LCHs in the LCHs associated with the MAC entity, the LCH mapping restriction is maintained or used on the LCHs associated with the MAC entity.

In example 25, the method of example 21, wherein
in a case where one MAC entity is associated with a plurality of LCHs, and duplication transmission is deactivated or the duplication transmission corresponding to the MAC entity is deactivated, and there is only one activated LCH in the LCHs associated with the MAC, the LCH mapping restriction is not used on the LCHs associated with the MAC entity; or
in a case where one MAC entity is associated with a plurality of LCHs, and there is only one activated LCH in the LCHs associated with the MAC, the LCH mapping restriction is not used on the LCHs associated with the MAC entity.

In example 26, the method of example 21, wherein
in a case where one MAC entity is associated with a plurality of LCHs, duplication transmission is deactivated or the duplication transmission corresponding to the MAC entity is deactivated, and there is no activated LCH in the LCHs associated with the MAC, the LCH mapping restriction is not used on the LCHs associated with the MAC entity; or
in a case where one MAC entity is associated with a plurality of LCHs, and there is no activated LCH in the LCHs associated with the MAC, the LCH mapping restriction is not used on the LCHs associated with the MAC entity.

In example 27, the method of any one of examples 20 to 26, further comprising: receiving first information, wherein the first information is used for configuring the LCH mapping restriction, and the LCH mapping restriction is configured by taking an LCH or an RLC entity as a unit.

In example 28, there is provided a communication device, comprising:
a processing unit, configured to determine that a first resource overlaps with a second resource, the first resource being used for carrying an uplink Scheduling Request (SR), and the second resource being used for carrying uplink data; and
a transceiving unit, configured to transmit the uplink SR in a case where a first condition is satisfied,
wherein the first condition comprises a priority of the uplink SR being different from a priority of a first uplink grant and the first uplink grant being used for transmitting the uplink data; or the first condition comprises a priority of the first resource being different from a priority of the second resource and the second resource corresponding to the first uplink grant.

In example 29, the device of example 28, wherein the priority of the uplink SR being different from the priority of a first uplink grant, or the priority of the first resource being different from the priority of the second resource comprises:
a priority of a Logical Channel (LCH) of the uplink SR being higher than a priority of an LCH of the first uplink grant; or
a priority of an LCH triggering the uplink SR being higher than the priority of the LCH of the first uplink grant; or
the priority of an LCH triggering the uplink SR being higher than the priority of the first uplink grant.

In example 30, the device of example 29, wherein the first condition further comprises one or more of the following:
a priority of a Physical (PHY) layer of the uplink SR being different from a priority of a PHY layer of the first uplink grant;
the priority of the PHY layer of the uplink SR being higher than the priority of the PHY layer of the first uplink grant;
a priority of a PHY layer of the first resource being different from the priority of the PHY layer of the first uplink grant;
the priority of the PHY layer of the first resource being higher than the priority of the PHY layer of the first uplink grant;
the uplink SR being transmittable by a PHY layer or a lower layer of a Media Access Control (MAC) layer;
determining, according to a priority of the PHY layer, the uplink SR being transmittable by the PHY layer or the lower layer of the MAC layer; and
determining, according to the priority of the PHY layer, the uplink SR being transmittable.

In example 31, the device of any one of examples 28 to 30, wherein
the processing unit is further configured to: in a case where the priority of the PHY layer of the uplink SR is same as the priority of the PHY layer of the first uplink grant, identify the uplink SR as a de-prioritized uplink SR, or determine that the priority of the uplink SR is lower than the priority of the uplink grant; or
the processing unit is further configured to: in a case where the priority of the PHY layer of the first resource is same as the priority of the PHY layer of the first uplink grant, identify the uplink SR as a de-prioritized uplink SR, or determine that the priority of the uplink SR is lower than the priority of the uplink grant; or
the processing unit is further configured to: in a case where the priority of the PHY layer of the uplink SR is same as the priority of the PHY layer of the first uplink grant, identify the first uplink grant as a prioritized uplink SR, or identify the second resource as a prioritized resource; or
the processing unit is further configured to: in a case where the priority of the PHY layer of the first resource is same as the priority of the PHY layer of the first uplink grant, identify the first uplink grant as a prioritized uplink grant, or identify the second resource as a prioritized resource.

In example 32, the device of example 30 or 31, wherein
the transceiving unit is further configured to receive first information and second information from a network device, the first information being used for configuring the priority of the PHY layer of the first uplink SR or the priority of the PHY layer of the first resource, and the second information being used for configuring the priority of the PHY layer of the first uplink grant.

In example 33, the device of any one of examples 28 to 32, wherein
the processing unit is further configured to identify the uplink data as prioritized uplink data in a case where the first condition is not satisfied.

In example 34, the device of any one of examples 28 to 33, wherein
the processing unit is specifically configured to: in a case where a second condition is satisfied, transmit the uplink SR, or identify the uplink SR as a prioritized uplink SR,
wherein the second condition comprises at least one of the following:
an MAC entity being configured with a priority of an LCH;
the first resource not overlapping with a resource granted by a second uplink grant; or
the priority of the LCH triggering the uplink SR being higher than the priority of the second resource.

In example 35, the device of any one of examples 28 to 34, wherein the uplink data is a MAC Protocol Data Unit (PDU), a Physical Uplink Shared Channel (PUSCH), or an Uplink Shared Channel (UL-SCH).

In example 36, there is provided a communication device, comprising:
a processing unit, configured to determine that a third condition is satisfied and a first resource does not overlap with a second resource, wherein the first resource is used for carrying uplink data, the second resource is used for carrying an uplink Scheduling Request (SR), the third condition comprises a priority of a first uplink grant being different from a priority of the uplink SR, and the first uplink grant is used for transmitting the uplink data; and
a transceiving unit, configured to transmit the uplink data.

In example 37, the device of example 36, wherein the priority of the first uplink grant being different from the priority of the uplink SR comprises one or more of the following:
a priority of the Physical (PHY) layer of the uplink SR being higher than a priority of the PHY layer of the first uplink grant;
the priority of the PHY layer of the uplink SR being different from the priority of the PHY layer of the first uplink grant;
the priority of the PHY layer of the uplink SR being different from a priority of the PHY layer of the first resource;
a priority of the PHY layer of the second resource being different from the priority of the PHY layer of the first resource;
the priority of the PHY layer of the uplink SR being higher than the priority of the PHY layer of the first resource;
the priority of the PHY layer of the second resource being higher than the priority of the PHY layer of the first resource;
a priority of a Logical Channel (LCH) of the uplink SR being higher than the priority of the first uplink grant;
the priority of the LCH of the uplink SR being higher than a priority of the LCH of the first uplink grant;
a priority of the LCH triggering the uplink SR being higher than the priority of the LCH of the first uplink grant;
the priority of the LCH triggering the uplink SR being higher than the priority of the first uplink grant;
the uplink data being transmittable by a PHY layer or a lower layer of a Media Access Control (MAC) layer; or
the uplink SR being transmittable by the PHY layer or the lower layer of the MAC layer.

In example 38, the device of example 36 or 37, wherein transmitting the uplink data comprises:
in a case where a fourth condition is satisfied, transmitting the uplink data, or identifying the uplink data as prioritized uplink data,
wherein the fourth condition comprises one or more of the following:
   an MAC entity being configured with a priority of an LCH;
   the uplink data being transmittable by a PHY layer or a lower layer of a Media Access Control (MAC) layer; or
   the uplink SR being not transmittable by the PHY layer or the lower layer of the MAC layer.

In example 39, there is provided a communication device, comprising:
a transceiving unit, configured to receive first information from a network device, wherein the first information is used for indicating a first time-frequency resource position, and the first time-frequency resource position is a preempted time-frequency resource position;
a processing unit, configured to determine that a first resource is preempted in a case where the first resource overlaps with the time-frequency resource position, the first resource being a resource carrying uplink data; and
the processing unit is further configured to identify the first resource as a de-prioritized resource in a case where the first condition is satisfied,
wherein the first condition comprises the communication device being configured with uplink cancellation configuration information or being indicated with uplink cancellation information.

In example 40, the device of example 39, wherein the first condition further comprises the priority of the first resource being a first priority, the first priority being a priority in a priority set, and the priority set at least comprising the first priority and a second priority, wherein the first priority is lower than the second priority.

In example 41, the device of example 40, wherein the first priority is at least one of a priority of a Logical Channel (LCH) or a priority of a Physical (PHY) layer.

In example 42, the device of example 40 or 41, wherein the first condition further comprises one or more of the following:
a Media Access Control (MAC) entity being configured with a priority of an LCH; or
configuration information of the first terminal device comprising priority information of the first information, or the priority information of the first information in the configuration information of the first terminal device being enabled.

In example 43, the device of any one of examples 39 to 42, wherein the time-frequency resource position comprises a second resource, the second resource is a resource used a second terminal device to transmit data, in a case where the first condition is satisfied, the first terminal device identifies the second resource as a prioritized resource, or the terminal device determines that a priority of the second resource is higher than the priority of the first resource.

In example 44, there is provided a communication device, comprising:
a processing unit, configured to determine that a first resource overlaps with a second resource, the first resource being a Dynamic Grant (DG) resource, and the second resource being a Configured Grant (CG) resource; and
a transceiving unit, configured to: in a case where a first condition or a second condition is satisfied, transmit the DG resource, or identify the DG resource as a prioritized resource, wherein the first condition or the second condition at least comprises determining that the DG resource is transmittable according to at least one of the priority of the DG resource or the priority of the CG resource.

In example 45, the device of example 44, wherein the first condition comprises one or more of the following:
a priority of a Physical (PHY) layer of the DG resource being same as a priority of a PHY layer of the CG resource;
the CG resource being not transmittable by a PHY layer or a lower layer of a Media Access Control (MAC) layer; or
according to the priority of the PHY layer, the CG resource being not transmittable by the PHY layer or the lower layer of the MAC layer.
In example 46, the device of example 44, wherein the second condition comprises one or more of the following:
a priority of a PHY layer of the DG resource being different from a priority of a PHY layer of the CG resource;
the CG resource being transmittable by a PHY layer or a lower layer of a Media Access Control (MAC);
the DG resource being transmittable by the PHY layer or the lower layer of the MAC layer;
according to the priority of the PHY layer, the DG resource being transmittable by the PHY layer or the lower layer of the MAC layer;
according to the priority of the PHY layer, the CG resource being transmittable by the PHY layer or the lower layer of the MAC layer;
the priority of the DG resource being higher than the priority of the PHY layer of the CG resource; or
a priority of a Logical Channel (LCH) of the DG resource being higher than a priority of an LCH of the CG resource.

In example 47, there is provided a communication device, comprising:
a detection unit, configured to detect that more than two Radio Link Control (RLC) entities or more than two LCHs transmit duplicated data, or configured to detect that the duplicated data is transmitted in a Carrier Aggregation (CA) transmission mode in combination with a Dual Connectivity (DC) transmission mode; and
a processing unit, configured to determine to use or not use a Logical Channel (LCH) mapping restriction on LCHs or the RLC entities, the LCH mapping restriction being used for restricting a carrier used when the LCHs transmit data.

In example 48, the device of example 47, wherein the more than two RLC entities are associated with one or more Media Access Control (MAC) entities, or the more than two LCHs are associated with one or more MAC entities.

In example 49, the device of example 47, wherein the more than two RLC entities are associated with one bearer, or the more than two LCHs are associated with one bearer.

In example 50, the device of example 48, wherein in a case where one MAC entity is only associated with one LCH, and duplication transmission is deactivated or duplication transmission corresponding to the MAC entity is deactivated, the LCH mapping restriction is maintained or used on the LCH associated with the MAC entity; and/or in a case where one MAC entity is only associated with one LCH, and duplication transmission is activated or the duplication transmission corresponding to the MAC entity is activated, the LCH mapping restriction is maintained or used on the LCH associated with the MAC entity.

In example 51, the device of example 48, wherein
in a case where one MAC entity is associated with a plurality of LCHs, duplication transmission is deactivated or the duplication transmission corresponding to the MAC entity is deactivated, and there are a plurality of activated LCHs in the LCHs associated with the MAC entity, the LCH mapping restriction is maintained or used on the LCHs associated with the MAC entity, or,
in a case where one MAC entity is associated with a plurality of LCHs, and there are a plurality of activated LCHs in the LCHs associated with the MAC entity, the LCH mapping restriction is maintained or used on the LCHs associated with the MAC entity.

In example 52, the device of example 48, wherein
in a case where one MAC entity is associated with a plurality of LCHs, duplication transmission is deactivated or the duplication transmission corresponding to the MAC entity is deactivated, and there is only one activated LCH in the LCHs associated with the MAC, the LCH mapping restriction is not used on the LCHs associated with the MAC entity; or,
in a case where one MAC entity is associated with a plurality of LCHs, and there is only one activated LCH in the LCH associated with the MAC, the LCH mapping restriction is not used on the LCHs associated with the MAC entity.

In example 53, the device of example 48, wherein
in a case where one MAC entity is associated with a plurality of LCHs, duplication transmission is deactivated or the duplication transmission corresponding to the MAC entity is deactivated, and there is no activated LCH in the LCHs associated with the MAC, the LCH mapping restriction is not used on the LCHs associated with the MAC entity; or
in a case where one MAC entity is associated with a plurality of LCHs, and there is no activated LCH in the LCHs associated with the MAC, the LCH mapping restriction is not used on the LCHs associated with the MAC entity.

In example 54, the device of any one of examples 47 to 53, comprising:
a transceiving unit, configured to receive first information, wherein the first information is used for configuring the LCH mapping restriction, and the LCH mapping restriction is configured by taking an LCH or an RLC entity as a unit.

In example 55, there is provided a communications device, comprising at least one processor coupled with a memory, wherein
the memory is configured to store a program or instructions;
the at least one processor is configured to execute the program or instructions, so that the device implements the method of any one of examples 1 to 27.

In example 56, there is provided a computer-readable storage medium, comprising a computer program that, when being executed by one or more processors, enables a device comprising the processor to implement the method of any one of examples 1 to 27.

In example 57, there is provided a computer program product, comprising a computer program that, when being run, implements the method of any one of examples 1 to 27.

In example 58, there is provided a chip, comprising at least one processor and a communication interface, wherein
the communication interface is configured to receive a signal input into the chip or a signal output from the chip; and the processor communicates with the communication interface, and is configured to implement the method of any one of examples 1 to 27 by a logical circuit or executing code instructions.

In several embodiments provided by the present disclosure, it is to be understood that the disclosed device and method may be implemented in other manners. For example, the device embodiments described above are merely exemplary. For example, the module division is merely logical function division and may be other division in actual implementation. For example, a plurality of modules may be combined or integrated into another system, or some features may be ignored or not performed. In addition, the displayed or discussed mutual couplings or direct couplings or communication connections may be implemented through some interfaces. The indirect couplings or communication connections between the modules may be implemented in electrical, mechanical, or other forms.

In specific implementation of the abovementioned terminal device and network device, it is to be understood that the processor may be CPU, or other general-purpose processors, DSP, ASIC, etc. The general-purpose processor may be a microprocessor, or the processor may also be any conventional processor or the like. The steps of the method disclosed with reference to the present disclosure may be directly performed and completed by a hardware processor, or may be performed and completed by using a combination of hardware in the processor and a software module.

All or part of the steps for implementing various method embodiments mentioned above may be completed by hardware relevant to a program instruction. The foregoing program may be stored in a readable memory. When the program is executed, the steps including various method embodiments mentioned above are performed. The foregoing memory (storage medium) includes: a ROM, a RAM, a hard disk, a solid state disk, a magnetic tape, a floppy disk, an optical disk, and any combination thereof.

The above is only a specific implementation mode of the disclosure and not intended to limit the scope of protection of the disclosure. Any variation or replacement readily figured out by a person skilled in the art within the technical scope disclosed in the disclosure shall fall within the scope of the protection of the disclosure. Therefore, the scope of protection of the disclosure shall be subject to the scope of protection of the claims.

## Claims

1. A communication method, **characterized in that** the method comprises:
in a case where more than two Radio Link Control, RLC, entities transmit duplicated data, determining to use or not use a Logical Channel, LCH, mapping restriction on the RLC entities, wherein the LCH mapping restriction is used for restricting a carrier used when LCHs transmit data.

2. The method of claim 1, wherein the more than two RLC entities are associated with one or more Media Access Control, MAC, entities.

3. The method of claim 1, wherein the more than two RLC entities are associated with one bearer.

4. The method of claim 2, wherein
in a case where one MAC entity is associated with a plurality of LCHs, and duplication transmission corresponding to the MAC entity is deactivated, and there is only one activated LCH in the LCHs associated with the MAC, the LCH mapping restriction is not used on the LCHs associated with the MAC entity.

5. The method of claim 2, wherein
in a case where one MAC entity is associated with a plurality of LCHs, duplication transmission corresponding to the MAC entity is deactivated, and there is no activated LCH in the LCHs associated with the MAC, the LCH mapping restriction is not used on the LCHs associated with the MAC entity.

6. The method of any one of claims 1 to 5, further comprising: receiving first information, wherein the first information is used for configuring the LCH mapping restriction, and the LCH mapping restriction is configured by taking an LCH as a unit.

7. The method of claim 2, wherein in a case where one MAC entity is only associated with one LCH, and duplication transmission corresponding to the MAC entity is deactivated, the LCH mapping restriction is maintained or used on the LCH associated with the MAC entity; and/or in a case where one MAC entity is only associated with one LCH, and duplication transmission corresponding to the MAC entity is activated, the LCH mapping restriction is maintained or used on the LCH associated with the MAC entity.

8. The method of claim 2, wherein
in a case where one MAC entity is associated with a plurality of LCHs, duplication transmission corresponding to the MAC entity is deactivated, and there are a plurality of activated LCHs in the LCHs associated with the MAC entity, the LCH mapping restriction is maintained or used on the LCHs associated with the MAC entity; or
in a case where one MAC entity is associated with a plurality of LCHs, and there are a plurality of activated LCHs in the LCHs associated with the MAC entity, the LCH mapping restriction is maintained or used on the LCHs associated with the MAC entity.

9. A communication device, **characterized in that** the device comprises:
a detection unit, configured to detect that more than two Radio Link Control, RLC, entities transmit duplicated data; and
a processing unit, configured to determine to use or not use a Logical Channel, LCH, mapping restriction on the RLC entities, the LCH mapping restriction being used for restricting a carrier used when LCHs transmit data.

10. The device of claim 9, wherein the more than two RLC entities are associated with one or more Media Access Control, MAC, entities.

11. The device of claim 9, wherein the more than two RLC entities are associated with one bearer.

12. The device of claim 10, wherein
in a case where one MAC entity is associated with a plurality of LCHs, duplication transmission corresponding to the MAC entity is deactivated, and there is only one activated LCH in the LCHs associated with the MAC, the LCH mapping restriction is not used on the LCHs associated with the MAC entity; or,
in a case where one MAC entity is associated with a plurality of LCHs, duplication transmission corresponding to the MAC entity is deactivated, and there is no activated LCH in the LCHs associated with the MAC, the LCH mapping restriction is not used on the LCHs associated with the MAC entity.

13. The device of any one of claims 9 to 12, comprising:
a transceiving unit, configured to receive first information, wherein the first information is used for configuring the LCH mapping restriction, and the LCH mapping restriction is configured by taking an LCH as a unit.

14. A computer-readable storage medium, comprising a computer program that, when being executed by one or more processors, enables a device comprising the processor to implement the method of any one of claims 1 to 8.

15. A chip, comprising at least one processor and a communication interface, wherein
the communication interface is configured to receive a signal input into the chip or a signal output from the chip; and the processor communicates with the communication interface, and is configured to implement the method of any one of claims 1 to 8 by a logical circuit or executing code instructions.
